# EUROPEAN PATENT APPLICATION

(11) **EP 4 803 562 A1**
(43) Date of publication of application: **09.09.2026**
(21) Application number: 24884690.9
(22) Date of filing: 28.10.2024
(51) Int. Cl.: C08J 3/03, C08L 67/04, C08K 13/02, D21H 19/28, C09D 167/04, C09D 7/40

(54) **BIODEGRADABLE COMPOSITION AND LOW-TEMPERATURE FILM-FORMING PROCESS USING SAME**

(30) Priority: 01.11.2023 CN 202311447505
(71) Applicant: Kemira OYJ, 00180 Helsinki (FI)
(72) Inventor: CHEN, Xiaoyu, Shanghai 201114 (CN); YAN, Jiasong, Shanghai 201114 (CN); LI, Fengyang, Shanghai 201114 (CN); XIAO, Lan, Shanghai 201114 (CN)
(74) Representative: Cabinet Becker et Associés
(86) International application number: PCT/CN2024/127916
(87) International publication number: WO 2025/092687

(57) **Abstract**

The present invention relates to the technical field of film forming compositions. In particular, the present invention relates to biodegradable composition and low temperature film forming process using same. The biodegradable compositions described herein comprise a biodegradable polymer, a surfactant, a crosslinking agent and a first additive.

## Description

### Technical Field

The present invention relates to the technical field of film forming compositions. In particular, the present invention relates to biodegradable composition and low temperature film forming process using same.

### Background Technology

In order to provide better performance to packaging materials (for example paper-based materials), additional films (for example, films of petroleum-based materials such as PE, PP, PET, etc.) can be applied to the surface of the packaging material. As environmental regulations continue to become stricter, higher requirements have been put forward for the environmental performance of packaging. More and more researches are considering the use of biodegradable materials (e.g., PHA, PLA, etc.) instead of traditional petroleum-based materials to improve the environmental performance of packaging.

When applying biodegradable materials to paper-plastic composite food packaging, two technologies can be used. One is employing extruder or injection mold to melt the material to be applied to form a film (also known as lamination), which is then laminated to the substrate. The drawback of this technology includes low operating speeds, high energy consumption, and high demand of precise temperature control. The other technology is to formulate dispersion (e.g., a water-based dispersion of a polymer or plastic), then coating on the substrate, which undergoes initial drying at a temperature of about 100°C to remove as much of the solvent (e.g., water) as possible. Then it is further heated to higher temperatures (about 20-50°C above the Tₘ of the polymer or plastic) to form a film (such technique may also be referred to as the high temperature film forming process). The second technique is preferred as it requires less investment in equipment.

The second existing technology described above (i.e., the dispersion coating technique) is typically characterized by long heating times and high heating temperatures. Moreover, the Tₘ of polymers or plastics currently used in the second technique described above is typically greater than 150°C. The drawbacks arising in practice include extremely high energy consumption (high film forming temperature requirements), high safety risks (fiber dust fire or explosion), and low production efficiency. In addition, drying at high temperatures causes the moisture content of the coated paper to decrease, which would harm the printability of the paper. Furthermore, the escape of moisture from the coating layer during drying at high temperatures tends to create pinholes, which can lead to deterioration of the barrier properties.

There is a continuing requirement in the art for film forming processes at mild temperatures (referred to as the low temperature film forming process herein).

### Summary of the Invention

The present invention provides a biodegradable (barrier) composition and a low temperature film forming process using same. Compared to known high temperature (approximately 20-50°C above the melting temperature (Tm) of polymers or plastics) film forming processes, the low temperature film forming process of the present invention is characterized in that the film forming temperature thereof is lower than the melting temperature of the biodegradable material in the composition. The film forming temperature of the low temperature film forming process of the present invention is about 50-100°C lower than that of the known high temperature film forming process. The technical solution of the present invention significantly reduces the energy consumption in film forming and improves production efficiency.

The biodegradable compositions described herein may be used to form a barrier layer. The biodegradable composition of the present invention comprises a biodegradable polymer, a surfactant, a crosslinking agent and a first additive, wherein the first additive comprises liquid crystal emulsifier, pigment, and/or water-resistance agent. In a preferred embodiment, the biodegradable composition also comprises a second additive. In a further preferred embodiment, said biodegradable composition further comprises water. In a still further preferred embodiment, the balance is water.

In one embodiment, the biodegradable composition comprises 10 to 60 wt% of a biodegradable polymer, such as 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60wt%, and any subrange comprising these point values.

In one embodiment, the biodegradable composition comprises 0.01 to 5 wt% of a surfactant, such as 0.01, 0.02, 0.03, 0.04, 0.05, 0.06, 0.07, 0.08, 0.09, 0.10, 0.2, 0.3, 0.4, 0.5, 0.6, 0.7, 0.8, 0.9, 1.0, 1.2, 1.4, 1.6, 1.8, 2.0, 2.2, 2.4, 2.6, 2.8, 3.0, 3.2, 3.4, 3.6, 3.8, 4.0, 4.2, 4.4, 4.6, 4.8, 5.0 wt%, and any subrange consisting of these point values.

In one embodiment, the biodegradable composition comprises 0.01 to 8 wt% of a crosslinking agent, such as 0.01, 0.02, 0.03, 0.04, 0.05, 0.06, 0.07, 0.08, 0.09, 0.10, 0.2, 0.3, 0.4, 0.5, 0.6, 0.7, 0.8, 0.9, 1.0, 1.2, 1.4, 1.6, 1.8, 2.0, 2.2, 2.4, 2.6, 2.8, 3.0, 3.2, 3.4, 3.6, 3.8, 4.0, 4.2, 4.4, 4.6, 4.8, 5.0, 5.2, 5.4, 5.6, 5.8, 6.0, 6.2, 6.4, 6.6, 6.8, 7.0, 7.2, 7.4, 7.6, 7.8, 8.0 wt%, and any subrange consisting of these point values.

In one embodiment, the biodegradable composition comprises 0.01 to 10 wt% of a first additive such as 0.01, 0.02, 0.03, 0.04, 0.05, 0.06, 0.07, 0.08, 0.09, 0.10, 0.2, 0.3, 0.4, 0.5, 0.6, 0.7, 0.8, 0.9, 1.0, 1.2, 1.4, 1.6, 1.8, 2.0, 2.2, 2.4, 2.6, 2.8, 3.0, 3.2, 3.4, 3.6, 3.8, 4.0, 4.2, 4.4, 4.6, 4.8, 5.0, 5.2, 5.4, 5.6, 5.8, 6.0, 6.2, 6.4, 6.6, 6.8, 7.0, 7.2, 7.4, 7.6, 7.8, 8.0, 8.2, 8.4, 8.6, 8.8, 9.0, 9.2, 9.4, 9.6, 9.8, 10.0 wt%, and any subrange consisting of these point values.

In one embodiment, the biodegradable composition comprises 0.01 to 8 wt% of a second additive such as 0.01, 0.02, 0.03, 0.04, 0.05, 0.06, 0.07, 0.08, 0.09, 0.10, 0.2, 0.3, 0.4, 0.5, 0.6, 0.7, 0.8, 0.9, 1.0, 1.2, 1.4, 1.6, 1.8, 2.0, 2.2, 2.4, 2.6, 2.8, 3.0, 3.2, 3.4, 3.6, 3.8, 4.0, 4.2, 4.4, 4.6, 4.8, 5.0, 5.2, 5.4, 5.6, 5.8, 6.0, 6.2, 6.4, 6.6, 6.8, 7.0, 7.2, 7.4, 7.6, 7.8, 8.0 wt%, and any subrange consisting of these point values.

In a preferred embodiment, the biodegradable composition comprises:
10-60 wt% of a biodegradable polymer;
0.01-5 wt% of a surfactant;
0.01-8 wt% of a crosslinking agent;
0.01-10 wt% of a first additive, wherein the first additive comprises liquid crystal emulsifier, pigment, and/or water-resistance agent.

In a preferred embodiment, the biodegradable composition comprises:
10-60 wt% of a biodegradable polymer;
0.01-5 wt% of a surfactant;
0.01-8 wt% of a crosslinking agent; and
0.01-10 wt% of a first additive, wherein the first additive comprises liquid crystal emulsifier, pigment, and/or water-resistance agent.

In a preferred embodiment, the biodegradable composition comprises:
10-60 wt% of a biodegradable polymer;
0.01-5 wt% of a surfactant;
0.01-8 wt% of a crosslinking agent;
0.01-10 wt% of a first additive, wherein the first additive comprises liquid crystal emulsifier, pigment, and/or water-resistance agent; and
water.

In still another preferred embodiment, the biodegradable composition comprises:
10-60 wt% of a biodegradable polymer;
0.01-5 wt% of a surfactant;
0.01-8 wt% of a crosslinking agent;
0.01-10 wt% of a first additive, wherein the first additive comprises liquid crystal emulsifier, pigment, and/or water-resistance agent;
0.01-8 wt% of a second additive; and
water.

In one embodiment, the second additive described herein includes: co-crosslinking agent, nucleating agent, stabilizer, or a combination thereof.

As described herein, the biodegradable polymer comprises polyhydroxyalkanoate (PHA), polylactic acid (PLA), polycaprolactone, polybutylene succinate (PBS), polyethylene glycol, or a combination thereof.

Biodegradable polymers described herein comprise homopolymer, copolymer, or blend (a blend of at least one homopolymer and at least one copolymer, two or more homopolymers, or two or more copolymers) , or a combination thereof.

In one embodiment, the polyhydroxyalkanoate (PHA) described herein comprises one or more repeating units derived from : 2-hydroxybutyrate (2HB), 3-hydroxypropionate (3HP), 4-hydroxybutyrate (4HB), 3-hydroxyvalerate (3HV), 4-hydroxyvalerate (4HV), 5-hydroxyvalerate (5HV), 3-hydroxyhexanoate (3HH), 6-hydroxyhexanoate (6HH), 3-hydroxyoctanoate (3HO), 3-hydroxydecanoate (3HD), or a combination thereof.

In one embodiment, the surfactant described herein may be an anionic surfactant, a cationic surfactant, a nonionic surfactant, an amphoteric surfactant, or a combination thereof, preferably a nonionic surfactant.

Exemplary cationic surfactants comprise amine salt-type surfactant, quaternary ammonium salt-type surfactant, heterocyclic surfactant, onium salt-type surfactant, or a mixture thereof. Preferably, exemplary cationic surfactants include salts of long-chain alkyl (e.g., C₁₀-C₂₀) amines (primary, secondary, tertiary), dodecyldimethylbenzyl ammonium chloride, polyquaternium, cetyltrimethyl ammonium chloride, octadecyltrimethyl ammonium chloride, cationic guar gums, etc.

Exemplary anionic surfactants include long chain fatty acid (e.g., C₁₀-C₂₀ fatty acid) salt, long chain alkyl (e.g., C₁₀ -C₂₀) sulfate, long chain alkyl (e.g., C₁₀-C₂₀) sulfonate, or a mixture thereof. Preferably, exemplary anionic surfactants include sodium stearate, magnesium stearate, calcium stearate, sodium palmitate, magnesium palmitate, calcium palmitate, sodium oleate, magnesium oleate, sodium dodecyl sulfate, sodium hexadecyl sulfate, sodium octadecyl sulfate, sodium dodecylbenzenesulfonate, sodium dioctylsulfosuccinate, etc.

Exemplary nonionic surfactants include polyoxyethylene fatty alcohol ether, polyoxyethylene fatty acid ester or polyoxyethylene sugar alcohol, fatty acid glyceride, or a combination thereof. For example, nonionic surfactant include polyoxyethylene (e.g., C₁₀-C₁₈, preferably C₁₂-C₁₆) fatty alcohol, or polyoxyethylene sorbitol (e.g., Tween, e.g., Tween 20, 40, 60, 80, or 85) and polyoxyethylene sorbitan (e.g., Span, e.g., Span 20, 40, 60, 80, or 85), and others.

Exemplary zwitterionic surfactants include betaine-type surfactant.

In one embodiment, the cross-linking agent comprises polyvinyl alcohol (PVA), cellulose or the salt thereof, carboxymethyl cellulose or the salt thereof, hydroxyethyl cellulose or the salt thereof, hydroxypropylmethyl cellulose or the salt thereof, isocyanate, polyamine, polyol, glycidyl ether, acrylic, methacrylic, acrylate, methacrylate, organosilane, organic peroxide, polysaccharide, gelatin, or a combination thereof. Exemplary cross-linking agent comprises polyvinyl alcohol (PVA), sodium cellulose, sodium carboxymethyl cellulose, sodium hydroxypropyl methylcellulose, diethyltoluene diamine, butylene glycol glycidyl ether, ethylene diamine tetraacetic acid (EDTA), dicumyl peroxide (DCP), benzoyl peroxide (BPO), di-tert-butyl peroxide (DTBP), diisopropylbenzene hydroperoxide, acrylic acid, hydroxyethyl acrylate, methacrylic acid, hydroxyethyl methacrylate, methyltrimethoxysilane, vinyltriethoxysilane, chloropropyltriethoxysilane, etc.

Liquid crystal emulsifiers are widely used in the cosmetics field. In one embodiment, the liquid crystal emulsifier described herein comprises lecithin liquid crystal emulsifier, alkyl glycoside liquid crystal emulsifier, (C₈-C₂₂) fatty acid ester liquid crystal emulsifier, phosphate ester liquid crystal emulsifier, long chain (C₈-C₂₂) fatty alcohol liquid crystal emulsifier, long chain fatty acid (such as C₁₀-C₂₀ fatty acid) liquid crystal emulsifier, or a combination thereof. Exemplary liquid crystal emulsifier comprises alkyl (C₈-C₂₂) glycoside, long chain (C₈-C₂₂) fatty alcohol, long chain fatty acid (such as C₁₀-C₂₀ fatty acid), or a combination thereof. Exemplary liquid crystal emulsifier comprises decyl glucoside, cetearyl glucoside, stearyl alcohol, cetyl alcohol, cetearyl alcohol, myristic acid, pentadecanoic acid, hexadecanoic acid or palmitic acid, heptadecanoic acid or margaric acid, octadecanoic acid or stearic acid, sorbitan stearate, sorbityl laurate, sucrose stearate, sorbityl oleate, glyceryl stearate, PEG-40 stearate, ceteareth-20, polyoxyethylene stearate (stearic acid polyoxyethylene ether), or a combination thereof.

In one embodiment, the co-crosslinking agent described herein comprises polyol, EDTA tetrasodium salt, sodium citrate, sodium pyrophosphate, sodium tripolyphosphate, multifunctional co-crosslinking agent, free radical co-crosslinking agent, or a combination thereof. Exemplary cross-linking agent comprises glycerol, dipropylene glycol, trimethylolpropane, pentaerythritol, sorbitol, trimethylolpropane acrylate (TMPTA), trimethylolpropane trimethacrylate (TMPTAMA), ethylene glycol diacrylate (EGDA), ethylene glycol dimethacrylate (EGDMA), N,N'-(1,4-phenylene) bismaleimide, zinc diacrylate (ZDA), zinc dimethacrylate (ZDMA), triallyl cyanurate (TAC), triallyl isocyanurate (TAIC), 1,2-polybutadiene (1,2-PBR), or a combination thereof.

In one embodiment, the nucleating agent described herein comprises talc, calcium oxide, carbon black, calcium carbonate, mica, inorganic pigments, kaolin, sodium succinate, sodium glutarate, sodium caproate, potassium benzoate, lithium benzoate, sodium cinnamate, sodium β-naphthylcarboxylate, metal phosphates, or a combination thereof.

In one embodiment, the pigment described herein include porcelain clay, talc, calcium carbonate, titanium dioxide, inorganic pigments (such as, chromate, sulfate, silicate, borate, molybdate, phosphate, vanadate, ferrocyanate, hydroxide, sulfide, etc.), or a combination thereof.

In one embodiment, the stabilizer described herein comprises antioxidant, heat-stabilizer, anti-aging agent, anti-ultraviolet agent, light-blocking agent, impact-resistance agent, or a combination thereof.

In one embodiment, the water-resistance agent described herein comprises a resin-type water-resistance agent, a zirconium carbonate-type water-resistance agent, or a combination thereof. Exemplary water-resistance agent comprises formaldehyde resin water-resistance agent, glyoxal resin water-resistance agent, urea-formaldehyde resin water-resistance agent, melamine formaldehyde resin water-resistance agent, ammonium zirconium carbonate (AZC), potassium zirconium carbonate (PZC), or a combination thereof.

The inventors surprisingly found that the first additive described herein achieves an advantageous effect. The first additive described herein comprises a liquid crystal emulsifier, a pigment, a water-resistance agent, or a combination thereof.

In one embodiment, the first additive described herein enables a low temperature film forming process. In a preferred embodiment, the first additive described herein enables the lowering of temperature for forming film (low temperature film forming) in use of forming film. The resulted film has advantageous effects, e.g., good barrier properties, low porosity, low adhesion to manufacturing equipment, and the like.

In one embodiment, the present invention provides a (film forming) process comprising the steps of applying a film forming material to a substrate, and placing the substrate applied with the film forming material in a film forming device to obtain a coated product, wherein the film forming device operates at a temperature ranging from 60 to 150°C, preferably 80 to 130°C. In particular, the film forming material forms a film. In one embodiment, the film forming material comprises the first additive described herein. In a preferred embodiment, the film forming material comprises the biodegradable polymer and the first additive described herein. In a still preferred embodiment, the film forming material comprises the biodegradable polymer, the surfactant, and the first additive described herein. In a still another preferred embodiment, the film forming material comprises the biodegradable polymer, the crosslinking agent, and the first additive described herein. In a most preferred embodiment, the film forming material comprises the biodegradable polymer, the surfactant, the crosslinking agent, and the first additive described herein.

In a preferred embodiment, the (film forming) process described herein comprises:
formulating the film forming material described herein into a slurry, and optionally, transferring the slurry into a (fast) mill for grinding until the particle size distribution being stabilized;
coating the (optionally, ground) slurry on a substrate to obtain a film-forming-material-coated substrate;
drying the film-forming-material-coated substrate (e.g., at 60 to 120°C in a drying oven) to obtain a dried film-forming-material-coated substrate (e.g., for 1 to 10 minutes);
placing the dried film-forming-material-coated substrate in a film forming device to obtain a coated product, wherein the film forming device operates at a temperature ranging from 60 to 150°C, preferably 80 to 130°C.

In one embodiment, the first additive described herein achieves excellent results in use of forming a film with biodegradable (barrier) compositions, such as lowering temperature for forming film (low temperature film forming). The resulted fim has advantageous effects, e.g., good barrier properties, low porosity, low adhesion to manufacturing equipment, and the like.

In one embodiment, the present invention provides a (film forming) process comprising the step of applying the biodegradable composition described herein to a substrate. In particular, the biodegradable composition forms a film.

In a preferred embodiment, the (film forming) process described herein comprises:
formulating the biodegradable composition described herein into a slurry, and optionally, transferring the slurry into a (fast) mill for grinding until the particle size distribution being stabilized;
coating the (optionally, ground) slurry on a substrate to obtain a coated substrate;
drying the coated substrate (e.g., at 60 to 120°C in a drying oven) to obtain a dried coated substrate (e.g., for 1 to 10 minutes);
placing the dried coated substrate in a film forming device to obtain a coated product, wherein the film forming device operates at a temperature lower than the melting temperature (Tm) of the biodegradable polymer, for example, 1 to 50°C lower than Tm. In an alternative embodiment, the film forming device operates at a temperature ranging from 60 to 150°C, preferably 80 to 130°C.

In one embodiment, the substrate is selected from the group consisting of paper, cardboard, fiberboard, starch, glass, metal, organic foam material, inorganic foam material, polymer film, or a combination thereof.

In one embodiment, the operating temperature of drying is 60 to 170°C, such as 60, 70, 80, 90, 100, 110, 120, 130, 140, 150, 160, 170°C, and any subrange consisting of these point values, preferably, 90 to 120°C.

In one embodiment, the drying time is from 1 to 10 min, such as 1, 2, 3, 4, 5, 6, 7, 8, 9, 10 min, and any subrange consisting of these point values, preferably, 1 to 5 min.

In one embodiment, the film forming device is operated at a temperature that is 1 to 50°C lower than the melting temperature (Tm) of the biodegradable polymer, i.e. in the range of Tm - 50 to Tm - 1°C. In one embodiment, the film forming device is operated at a temperature that is 1 to 50°C lower than the melting temperature (Tm) of the biodegradable polymer, such as 1, 5, 10, 15, 20, 25, 30, 35, 40, 45, 50°C, and any subrange consisting of these point values, preferably, 20 to 40°C lower.

In one embodiment, the operating temperature of the film forming device is 60 to 150°C, such as, 60, 70, 80, 90, 100, 110, 120, 130, 140, 150°C, and any subrange consisting of these point values, preferably, 80 to 130°C.

In one embodiment, the process described herein further comprises applying pressure. In one embodiment, the linear pressure of the film forming device is 1 to 600 kN/m, such as 1, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600 kN/m, and any subrange consisting of these point values, preferably in the range 60-300 kN/m.

The Tm described herein refers to the melting temperature of polymer. According to the actual situation, Tm can be either a point value or a range.

According to the actual situation, the melting point as described herein can be either a point value or a range. If the melting point is a range, it can be referred to as a melting range.

The low temperature film forming process described herein refers to a process in which film is formed under a temperature lower than the melting temperature of the used polymer. Correspondingly, low temperature film forming described herein refers to the formation of a film under a temperature lower than the melting temperature of the used polymer.

Herein, the terms "slurry", "dispersion" and "solution" can be used interchangeably, all of which refer to a mixture of a film forming material (a biodegradable composition) and a solvent (such as water) described herein.

Herein, the term "a coated product" refers to a produce of substrate with a film formed from the film forming material (the biodegradable composition), or a product yielded from the (film forming) process described herein. Herein, the terms "a coated product" and "a coated substrate" can be used interchangeably.

Herein, the terms "film" and "thin film" can be used interchangeably.

The film described herein refers to a film yield from the (film forming) process described herein, or a film yielded from the biodegradable composition described herein or from a material comprising one or more components of the biodegradable composition described herein.

The specification of the film described herein can be expressed in millimeter or micrometer, or be expressed in gram weight (g/m²). In one embodiment, the specification of the film described herein is from 0.01 micrometers to 1000 micormeters, such as, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 20, 30, 40, 50, 60, 70, 80, 90, 100, 150, 200, 250, 300, 350, 400, 450, 500, 550, 600, 650, 700, 750, 800, 850, 900, 950, 1000 micormeters, and any subrange consisting of these point values, preferably from 1 to 500 micormeters. In one embodiment, the specification of the film described herein is from 0.01 g/m² to 500 g/m², such as, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 20, 30, 40, 50, 60, 70, 80, 90, 100, 150, 200, 250, 300, 350, 400, 450, 500 g/m², and any subrange consisting of these point values, preferably from 1 to 200 g/m².

### Detailed Description

For better understand the present invention, the present invention is further elaborated below with reference to the Examples, but the content of present invention is not limited to the following Examples. The experimental operations described in the following Examples are conventional operations unless otherwise specified. The described reagents and materials are commercially available unless otherwise specified.

### Substrate

Cardboard, gram weight: 230g/m².

### Biodegradable polymer

PHA is: 3-hydroxybutyrate-co-3-hydroxyhexanoate (Examples 1-3), the melting temperature Tm is 145-170°C, molecular weight is 300,000-600,000 Daltons; 3-hydroxybutyrate-co-4-hydroxybutyrate (Examples 4-8), the melting temperature Tm is 145-170°C, molecular weight is 300,000-600,000 Daltons

### Surfactant

Tween 20, chemically pure;

Sodium oleate, chemically pure.

### Cross-linking agent

PVA is type 1788, with an alcoholysis degree of 87-89% (mol/mol);
Gelatin, food grade high viscosity gelatin;
Sodium carboxymethylcellulose, acid-resistant and highly viscous.

### The first additive

Cetearyl glucoside, melting point 45-55°C;
Stearic acid polyoxyethylene ether, melting point 56-60°C.;
Porcelain clay, average particle size 0.5µm.

### Test of Water-Resistance Cobb 300:

Tested according to TAPPI T 441 standard method for 300 s

### Test of Oil Resistance:

Tested according to ASTM F119-82 standard method.

### General steps for conventional high temperature film forming process:

1. Coating the biodegradable composition slurry on the substrate with a coating machine;
2. Placing the coated substrate in a hot oven and heat it to form a film. The temperature of the hot oven is higher than the melting temperature (Tm) of the biodegradable polymer.

### General steps for low temperature film forming processes:

1. Coating the biodegradable composition slurry on the substrate with a coating machine;
2. Placing the coated substrate in a hot oven to dry at a drying temperature of 105-120°C;
3. Using a hot-pressing device to hot-press the dried coated substrate. The hot-pressing temperature is 1-50°C lower than the melting temperature of the biodegradable polymer, and the linear pressure is 60-600kN/m.

### Example 1:

In order to show the effect of liquid crystal emulsifiers on film forming properties, coating formulations containing liquid crystal emulsifiers were prepared according to Table 1 and used in the film forming process provided according to the present invention. The specific components of the Examples were shown in Table 1. The barrier properties of the coatings obtained after film forming were shown in Table 2.

### Example 2:

According to the same method as Example 1, the formulations without liquid crystal emulsifiers were prepared and used in the film forming process. The specific components of Example 2 were shown in Table 1. The barrier properties of the coatings obtained after film forming were shown in Table 2.

### Example 3

In the present embodiment, stearic acid polyoxyethylene ether was used as a liquid crystal emulsifier to demonstrate low temperature film forming performance. The specific components of Example 3 were shown in Table 1. The barrier properties of the coatings obtained after film forming are shown in Table 2.

**Table 1:**

| Component | Example 1 | Example 2 | Example 3 |
|---|---|---|---|
| | Amount (wt%) | Amount (wt%) | Amount (wt%) |
| PHA | 40 | 40 | 40 |
| Tween 20 | 2 | 2 | 2 |
| PVA | 1.3 | 1.3 | 1.3 |
| Cetearyl glucoside | 1 | | |
| Stearic acid polyoxyethylene ether | | | 1 |
| Water | 55.7 | 56.7 | 55.7 |
| Results of low temperature film forming | success | failure | success |
| Description | The coating barrier properties were shown in Table 2 | The coating stuck to the roller, and were exfoliated from substrate. The low temperature film forming process cannot be carried out. | The coating barrier properties were shown in Table 2 |

**Table 2**

| | Example 1 (low temperature film forming process) | Example 1 (conventional high temperature film forming process) | Example 2 | Example 3 (low temperature film forming process) | Example 3 (conventional high temperature film forming process) |
|---|---|---|---|---|---|
| Water-resistance Cobb 300, g/m² | 4.3 | 5.5 | NA^{a} | 4.5 | 5.2 |
| Oil-resistance 40°C | 40-50 min | 30-40 min | NA^{a} | 30-40 min | 20-30 min |
| Coating amount, g/m² | 25.6 | 25.6 | NA^{a} | 22.3 | 22.3 |
| Condition of the process | 130°C; linear pressure: 160 kN/m; operating speed: 5m/min | 170°C, heating to form a film for 3 minutes | 130°C; linear pressure: 160 kN/m; operating speed: 5m/min | 130°C; linear pressure: 160 kN/m; operating speed: 5m/min | 170°C, heating to form a film for 3 minutes |

| | | | | | |
|---|---|---|---|---|---|
| ^{a} NA indicated that the characterization of barrier properties cannot be carried out because low temperature film forming could not be performed, so that no measurement data were available. | | | | | |

### Example 4

The present example used fatty acid, stearic acid, as a liquid crystal emulsifier to demonstrate low temperature film forming performance. The specific components of the Examples were shown in Table 3. The barrier properties of the coatings obtained after film forming were shown in Table 4.

### Example 5

According to the same method as Example 4, the formulations without fatty acid were prepared and used in the film forming process. The specific components of Example 5 were shown in Table 3. The barrier properties of the coatings obtained after film forming were shown in Table 4.

**Table 3**

| Component | Example 4 | Example 5 |
|---|---|---|
| | Amount (wt%) | Amount (wt%) |
| PHA | 20 | 20 |
| Sodium oleate | 1 | 1 |
| Gelatine | 2 | 2 |
| Stearic acid | 1 | |
| Water | 76 | 77 |
| Results of low temperature film forming | success | failure |
| Description | The coating barrier properties were shown in Table 4 | The coating stuck to the roller, and were exfoliated from substrate. The low temperature film forming process cannot be carried out. |

**Table 4**

| | Example 4 | Example 5 |
|---|---|---|
| Water-resistance Cobb 300, g/m² | 4.1 | NAa |
| Oil- resistance 40°C | > 240 min | NAa |
| Coating amount, g/m² | 23.0 | NAa |
| Condition of the process | 110°C; linear pressure: 160 kN/m; operating speed: 5m/min | |

| | | |
|---|---|---|
| ^{a} NA indicated that the characterization of barrier properties cannot be carried out because low temperature film forming could not be performed, so that no measurement data were available. | | |

### Example 6

The present example used porcelain clay (with an average particle size of 0.5µm) as pigment particles to demonstrate low temperature film forming performance. The specific components of the Examples were shown in Table 5. The barrier properties of the coatings obtained after film forming were shown in Table 6.

**Table 5**

| Component | Example 6 |
|---|---|
| | Amount (wt%) |
| PHA | 20 |
| Sodium oleate | 1 |
| PVA | 1.2 |
| Porcelain clay | 10 |
| Water | 67.8 |
| Results of low temperature film forming | success |
| Description | The coating barrier properties were shown in Table 6 |

**Table 6**

| | Example 6 (low temperature film forming process) | Example 6 (conventional high temperature film forming process) |
|---|---|---|
| Water-resistance Cobb 300, g/m² | 23.7 | 29.3 |
| Oil- resistance 40°C | 20-30 min | 15-20 min |
| Coating amount, g/m² | 14.0 | 14.0 |
| Condition of the process | 105°C; linear pressure: 160 kN/m; operating speed: 5m/min | 170°C, heating to form a film for 3 minutes |

### Example 7

The present example used water-resistance agent ammonium zirconium carbonate (AZC) to demonstrate low temperature film forming performance. The specific components of the Examples were shown in Table 7. The barrier properties of the coatings obtained after film forming were shown in Table 8.

### Example 8

According to the same method as Example 7, the formulations without ammonium zirconium carbonate (AZC) were prepared and used in the film forming process. The specific components of Example 8 were shown in Table 7. The barrier properties of the coatings obtained after film forming were shown in Table 8.

**Table 7**

| Component | Example 7 | Example 8 |
|---|---|---|
| | Amount (wt%) | Amount (wt%) |
| PHA | 35 | 35 |
| Sodium oleate | 2 | 2 |
| PVA | 1 | 1 |
| Sodium carboxymethyl cellulose | 0.5 | 0 |
| AZC | 0.8 | 0 |
| Water | 60.7 | 62 |
| Results of low temperature film forming | success | The dispersion were unstable. Coating and low temperature film forming cannot be conducted. |

**Table 8**

| | Example 7 | Example 8 |
|---|---|---|
| Water-resistance Cobb 300, g/m² | 2.5 | NA^{a} |
| Oil- resistance 40°C | 80-90 min | NA^{a} |
| Coating amount, g/m² | 26.0 | NA^{a} |
| Condition of the process | 110°C; linear pressure: 160 kN/m; operating speed: 5m/min | |

| | | |
|---|---|---|
| ^{a} NA indicated that the characterization of barrier properties cannot be carried out because low temperature film forming could not be performed, so that no measurement data were available. | | |

## Claims

1. A biodegradable composition comprising: a biodegradable polymer, a surfactant, a crosslinking agent and a first additive, wherein the first additive comprises a liquid crystal emulsifier, a pigment, and/or a water-resistance agent.

2. The biodegradable composition according to claim 1, wherein the biodegradable composition comprises 10-60wt% of biodegradable polymer.

3. The biodegradable composition according to any one of the preceding claims, wherein the biodegradable composition comprises 0.01-5 wt% of surfactant.

4. The biodegradable composition according to any one of the preceding claims, wherein the biodegradable composition comprises 0.01-8 wt% of crosslinking agent.

5. The biodegradable composition according to any one of the preceding claims, wherein the biodegradable composition comprises 0.01-10wt% of liquid crystal emulsifier.

6. The biodegradable composition according to any one of the preceding claims, wherein the biodegradable polymer comprises polyhydroxyalkanoate (PHA), polylactic acid (PLA), polycaprolactone, polybutylene succinate (PBS), polyethylene glycol (PEG), or a combination thereof; preferably, the biodegradable polymer comprises homopolymer, copolymer, or blend (a blend of at least one homopolymer and at least one copolymer, two or more homopolymers, or two or more copolymers); more preferably, the polyhydroxyalkanoate (PHA) comprises one or more repeating units derived from: 2-hydroxybutyrate (2HB), 3-hydroxybutyrate (3HB), 3-hydroxypropionate (3HP), 4-hydroxybutyrate (4HB), 3-hydroxyvalerate (3HV), 4-hydroxyvalerate (4HV), 5-hydroxyvalerate (5HV), 3-hydroxyhexanoate (3HH), 6-hydroxyhexanoate (6HH), 3-hydroxyoctanoate (3HO), 3-hydroxydecanoate (3HD), or a mixture thereof.

7. The biodegradable composition according to any one of the preceding claims, wherein the surfactant is an anionic surfactant, a cationic surfactant, a nonionic surfactant, a zwitterionic surfactant, or a combination thereof, preferably a nonionic surfactant; more preferably, the nonionic surfactant comprises polyoxyethylene fatty alcohol, polyoxyethylene sorbitol (such as Tween), polyoxyethylene sorbitan (such as Span).

8. The biodegradable composition according to any one of the preceding claims, wherein the cross-linking agent comprises polyvinyl alcohol (PVA), cellulose or the salt thereof, carboxymethyl cellulose or the salt thereof, hydroxyethyl cellulose or the salt thereof, hydroxypropylmethyl cellulose or the salt thereof, isocyanate, polyamine, polyol, glycidyl ether, acrylic, methacrylic, acrylate, methacrylate, organosilane, organic peroxide, polysaccharide, gelatin, or a combination thereof.

9. The biodegradable composition according to any one of the preceding claims, wherein the liquid crystal emulsifier comprises lecithin liquid crystal emulsifier, alkyl glycoside liquid crystal emulsifier, (C₈-C₂₂) fatty acid ester liquid crystal emulsifier, phosphate ester liquid crystal emulsifier, long chain (C₈-C₂₂) fatty alcohol liquid crystal emulsifier, long chain fatty acid (such as C₁₀-C₂₀ fatty acid) liquid crystal emulsifier, or a combination thereof, such as, decyl glucoside, cetearyl glucoside, stearyl alcohol, cetyl alcohol, cetearyl alcohol, myristic acid, pentadecanoic acid, hexadecanoic acid or palmitic acid, heptadecanoic acid or margaric acid, octadecanoic acid or stearic acid, sorbitan stearate, sorbityl laurate, sucrose stearate, sorbityl oleate, glyceryl stearate, PEG-40 stearate, and ceteareth-20, polyoxyethylene stearate (also known as stearic acid polyoxyethylene ether).

10. The biodegradable composition according to any one of the preceding claims, wherein the pigment comprises porcelain clay, talc, calcium carbonate, titanium dioxide, inorganic pigments (such as, chromate, sulfate, silicate, borate, molybdate, phosphate, vanadate, ferrocyanate, hydroxide, sulfide, etc.).

11. The biodegradable composition according to any one of the preceding claims, wherein the water-resistance agent is ammonium zirconium carbonate (AZC), and/or potassium zirconium carbonate (PZC)

12. A (film forming) process, comprising the step of applying the biodegradable composition according to any one of the preceding claims to a substrate.

13. The (film forming) process according to claim 12, comprising the steps of:
formulating the biodegradable composition into a slurry;
coating the slurry on a substrate to obtain a coated substrate;
drying the coated substrate to obtain a dried coated substrate;
placing the dried coated substrate in a film forming device to obtain a coated product, wherein
the film forming device operates at a temperature lower than the melting temperature (Tm) of the biodegradable polymer, for example, 1 to 50°C lower than Tm; or
the film forming device operates at a temperature ranging from 60 to 150°C, preferably 80 to 130°C.

14. The (film forming) process according to claim 12 or 13, wherein the substrate is selected from the group consisting of paper, cardboard, fiberboard, starch, glass, metal, organic foam material, inorganic foam material, polymer film, or a combination thereof.

15. The (film forming) process according to any one of claims 12 to 14, further comprising applying pressure, such as a linear pressure of 1 to 600 kN/m, preferably a linear pressure of 60-300 kN/m.

16. A (film forming) process, comprising the steps of:
applying a film forming material to a substrate;
placing the substrate applied with the film forming material in a film forming device to obtain a coated product, wherein the film forming device operates at a temperature ranging from 60 to 150°C, preferably 80 to 130°C,
wherein,
the film forming material comprises a first additive, wherein the first additive comprises a liquid crystal emulsifier, a pigment, and/or a water-resistance agent.

17. The (film forming) process according to claim 16, wherein the film forming material comprises a biodegradable polymer and a first additive, wherein the first additive comprises a liquid crystal emulsifier, a pigment, and/or a water-resistance agent; preferably, the film forming material comprises a biodegradable polymer, a surfactant, a crosslinking agent and a first additive, wherein the first additive comprises a liquid crystal emulsifier, a pigment, and/or a water-resistance agent.

18. The (film forming) process according to claim 16 or 17, wherein the substrate is selected from the group consisting of paper, cardboard, fiberboard, starch, glass, metal, organic foam material, inorganic foam material, polymer film, or a combination thereof.

19. The (film forming) process according to any one of claims 16 to 18, further comprising applying pressure, such as a linear pressure of 1 to 600 kN/m, preferably a linear pressure of 60-300 kN/m.
